# EUROPEAN PATENT APPLICATION

(11) **EP 4 407 790 A1**
(43) Date of publication of application: **31.07.2024**
(21) Application number: 23158037.4
(22) Date of filing: 22.02.2023
(51) Int. Cl.: H01P 5/12, H01Q 1/32, H01Q 13/02, H01Q 21/00, H01Q 21/08

(54) **SYMMETRICAL TWO-PIECE WAVEGUIDE**

(30) Priority: 24.01.2023 US 202318159014
(71) Applicant: Aptiv Technologies AG, 8200 Schaffhausen (CH)
(72) Inventor: Shi, Shawn, Thousand Oaks, CA, 91320 (US)
(74) Representative: Manitz Finsterwald Patent- und Rechtsanwaltspartnerschaft mbB

(57) **Abstract**

A symmetrical two-piece waveguide is described herein. The waveguide comprises an upper structure that forms a first symmetrical portion of at least one channel that defines an energy path between an input portion and a radiator portion of the channel. The waveguide further comprises a lower structure that forms a second symmetrical portion of the channel that is symmetrical to the first symmetrical portion about a separation plane when the upper and lower structures are mated. The upper structure further forms the radiator portion that extends orthogonally from an upper surface of the first symmetrical portion opposite the separation plane. The lower structure further forms the input portion that extends orthogonally from a lower surface of the second symmetrical portion opposite the separation plane. By using symmetry, the disclosed waveguide leverages the benefits of a two-piece design while enabling near-lossless channeling of energy without conductive bonding.

## Description

### BACKGROUND

Some devices (e.g., radar devices) use electromagnetic signals to detect and track objects. The electromagnetic signals are transmitted and received using antennas which may be characterized in terms of gains, beam widths, or, more specifically, in terms of antenna patterns, which are measures of the antenna gains as functions of directions. Waveguides are often used to change or improve such antenna patterns.

Two-piece waveguides have been developed that enable mass production, e.g., through injection molding two separate pieces and connecting them together to form a waveguide. Many two-piece waveguides, however, necessitate the use of conductive adhesives or solder to mitigate leakage through the joint between the two pieces. The use of solder increases complexity and/or costs of the waveguides.

### SUMMARY

This document is directed to a symmetrical two-piece waveguide. Some aspects described below include a waveguide that comprises an upper structure forming a first symmetrical portion of at least one channel that defines an energy path for electromagnetic energy to propagate between an input portion and a radiator portion of the channel. The waveguide further comprises a lower structure forming a second symmetrical portion of the channel that is aligned about a separation plane with the first symmetrical portion formed by the upper structure. The upper structure further forms the radiator portion to extend from the first symmetrical portion, orthogonal to the separation plane, and away from the second symmetrical portion. The lower structure further forms the input portion to extend from the second symmetrical portion, orthogonal to the separation plane, and away from the first symmetrical portion.

Other aspects described below include a method of forming a waveguide. The method comprises forming an upper structure of a waveguide that defines a first symmetrical portion of at least one channel for guiding electromagnetic energy between an input portion and a radiator portion of the channel. The method further comprises forming a lower structure of the waveguide that defines a second symmetrical portion of the channel that is aligned about a separation plane with the first symmetrical portion formed by the upper structure. The method also comprises mating the upper structure and the lower structure to form the waveguide. The upper structure also forms the radiator portion that extends from the first symmetrical portion, orthogonal to the separation plane, and away from the second symmetrical portion. The lower structure also forms the input portion that extends from the second symmetrical portion, orthogonal to the separation plane, and away from the first symmetrical portion.

This Summary introduces a simplified concept of, and a method of forming, a symmetrical two-piece waveguide that are further described in the Detailed Description and Drawings. This Summary is not intended to identify essential features of the claimed subject matter, nor is it intended for use in determining the scope of the claimed subject matter.

### BRIEF DESCRIPTION OF THE DRAWINGS

A symmetrical two-piece waveguide is described with reference to the following drawings that use some of the same numbers throughout to reference like or examples of like features and components.
Fig. 1 illustrates, in accordance with this disclosure, an example environment where a symmetrical two-piece waveguide may be used.
Fig. 2 illustrates, in accordance with this disclosure, example upper and lower portions of a symmetrical two-piece waveguide.
Figs. 3A and 3B illustrate, in accordance with this disclosure, example upper and lower symmetrical portions of the upper and lower portions of Fig. 2.
Figs. 4A and 4B illustrate, in accordance with this disclosure, example portions of the upper and lower portions of Fig. 2.
Fig. 5 illustrates, in accordance with this disclosure, an example method of forming a symmetrical two-piece waveguide.

### DETAILED DESCRIPTION

### Overview

Two-piece waveguides have been developed that provide benefits over single-piece waveguides. Many two-piece waveguides, however, necessitate the use of conductive adhesives or solder to mitigate leakage through the joints between the respective structures when they are assembled. The use of conductive adhesives or solder increases complexity and/or costs of the waveguides.

A symmetrical two-piece waveguide is described herein. The waveguide comprises an upper structure that forms a first symmetrical portion of at least one channel that defines an energy path between an input portion and a radiator portion of the channel. The waveguide further comprises a lower structure that forms a second symmetrical portion of the channel that is aligned about a separation plane with the first symmetrical portion. The upper structure further forms the radiator portion that extends from the first symmetrical portion, orthogonal to the separation plane, and away from the second symmetrical portion. The lower structure further forms the input portion that extends from the second symmetrical portion, orthogonal to the separation plane, and away from the first symmetrical portion.

By using symmetry, the disclosed waveguide leverages the benefits of a two-piece design while enabling near-lossless channeling of energy without the use of a conductive adhesive or solder between the pieces. Doing so enables the waveguide to be built easily, cheaply, and/or on a large scale.

### Example Environment

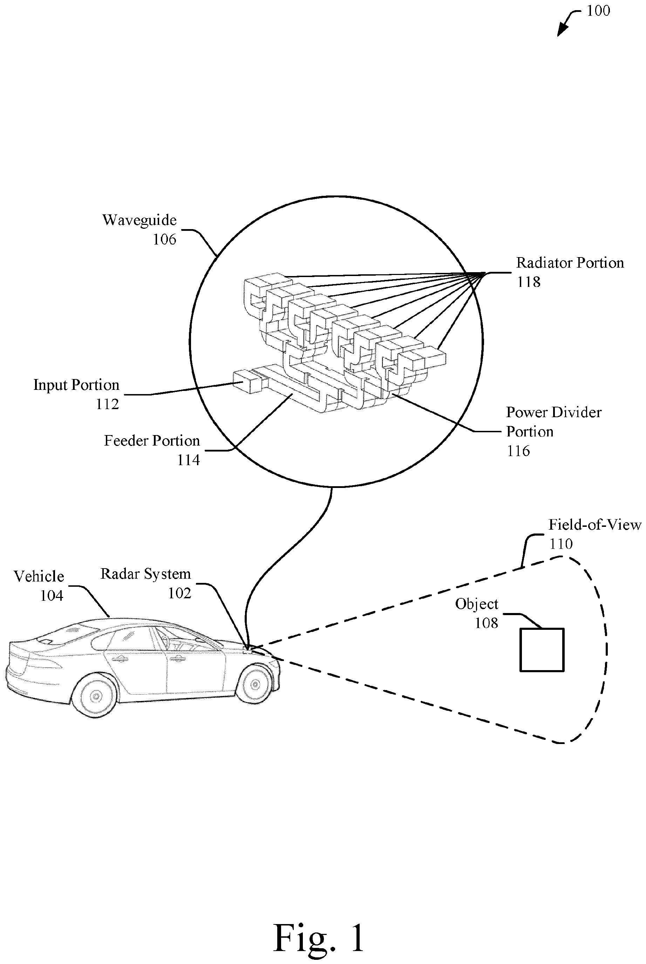

Fig. 1 illustrates an example environment 100 where a symmetrical two-piece waveguide may be used. The example environment 100 contains a radar system 102 that is disposed within, disposed on, or dispersed throughout a vehicle 104. The radar system 102 contains a waveguide 106 (e.g., a symmetrical two-piece waveguide) that may be used by the radar system 102 to determine a proximity, an angle, or a velocity of one or more objects 108 in the proximity of the vehicle 104.

Although illustrated as a car, the vehicle 104 can represent other types of motorized vehicles (e.g., a motorcycle, a bus, a tractor, a semi-trailer truck, construction equipment), non-motorized vehicles (e.g., a bicycle), railed vehicles (e.g., a train or a trolley car), watercraft (e.g., a boat or a ship), aircraft (e.g., an airplane or a helicopter), or spacecraft (e.g., satellite). In general, manufacturers can mount the radar system 102 to any moving platform, including moving machinery or robotic equipment. In other implementations, other devices (e.g., desktop computers, tablets, laptops, televisions, computing watches, smartphones, gaming systems) may incorporate the radar system 102 with the waveguide 106 and support techniques described herein.

In the example environment 100, the radar system 102 can detect and track the object 108 by transmitting one or more radar signals and receiving reflections of the radar signals off the object 108. For example, the radar system 102 can transmit electromagnetic signals between 100 and 400 gigahertz (GHz), between 4 and 100 GHz, or between approximately 70 and 80 GHz via the waveguide 106 and/or receive the reflections via the waveguide 106.

The radar system 102 can be part of the vehicle 104. The vehicle 104 can also include at least one automotive system that relies on data from the radar system 102, including a driver-assistance system, an autonomous-driving system, or a semi-autonomous-driving system. The radar system 102 can include an interface to the automotive systems. The radar system 102 can output, via the interface, a signal based on electromagnetic energy (e.g., radar energy) received by the radar system 102.

Generally, the automotive systems use radar data provided by the radar system 102 to perform a function. For example, the driver-assistance system can provide blind-spot monitoring and generate an alert indicating a potential collision with the object 108 detected by the radar system 102. In this case, the radar data from the radar system 102 indicates when it is safe or unsafe to change lanes. The autonomous-driving system may move the vehicle 104 to a particular location on the road while avoiding collisions with the object 108 detected by the radar system 102. The radar data provided by the radar system 102 can provide information about a distance to and the location of the object 108 to enable the autonomous-driving system to perform emergency braking, perform a lane change, or adjust the speed of the vehicle 104.

The radar system 102 generally includes a transmitter (not illustrated) and at least one antenna (not illustrated) that may be within, comprised by, or attached to the waveguide 106 to transmit electromagnetic signals. The radar system 102 generally includes a receiver (not illustrated) and at least one antenna, including the waveguide 110, to receive reflected versions of these electromagnetic signals. The transmitter includes components for emitting electromagnetic signals. The receiver includes components to detect the reflected electromagnetic signals. The transmitter and the receiver can be incorporated together on the same integrated circuit (e.g., a transceiver integrated circuit) or separately on different integrated circuits.

The radar system 102 also includes one or more processors (not illustrated) and computer-readable storage media (CRM) (not illustrated). The processor can be a microprocessor or a system-on-chip. The processor executes instructions stored within the CRM. As an example, the processor can control the operation of the transmitter. The processor can also process electromagnetic energy received by the antenna and determine the location of the object 108 relative to the radar system 102. The processor can also generate radar data for the automotive systems. For example, the processor can control, based on processed electromagnetic energy from the antenna, an autonomous or semi-autonomous driving system of the vehicle 104.

The waveguide 110 includes two structures (e.g., an upper structure and a lower structure) that can be any solid material, including wood, carbon fiber, fiber glass, metal, plastic, or a combination thereof. The waveguide 110 can also include or be a portion of a printed circuit board (PCB). The waveguide 110 is designed to mechanically support and electrically connect components (e.g., an input portion 112, a feeder portion 114, a power divider portion 116, and a radiator portion 118) to a dielectric using conductive materials.

The input portion 112 may be configured to interface with an antenna and/or portions of a PCB (e.g., a monolithic microwave integrated circuit (MMIC)). To do so, the input portion 112 may contain a rectangular waveguide. For example, the input portion 112 may comprise a WR10 waveguide. The radiator portion 118 is configured to radiate electromagnetic (EM) energy (e.g., radar energy) and receive EM energy (e.g., radar energy). Between the input portion 112 and the radiator portion 118 are the feeder portion 114 and the power divider portion 116. The feeder portion 114 is configured to carry the EM energy along an energy path between the input portion 112 and the power divider portion 116. The power divider portion 116 is configured to divide the EM energy via one or more splits to respective radiators of the radiator portion 118. In other words, the power divider portion 116 is configured to divide power between portions of the radiator portion 118. If a single radiator is used, the feeder portion 114 may carry/propagate the EM energy between the input portion 112 and the radiator portion 118 without a power divider portion 116.

The waveguide 106 is split along a separation plane that is normal to a direction of the EM energy in the input portion 112 and the radiator portion 118. The separation plane splits the feeder portion 114 and the power divider portion 116 (as well as other portions as discussed below) into mirrored halves. It should be noted that the waveguide 106 is illustrated as the surfaces of an internal cavity formed by the waveguide 106. Two structures (not shown), e.g., upper and lower structures, contain respective cavities that form the waveguide 106. The upper and lower structures are configured to mate using any known techniques. However, the use of conductive adhesives or solder is not necessary.

### Example Upper and Lower Portions

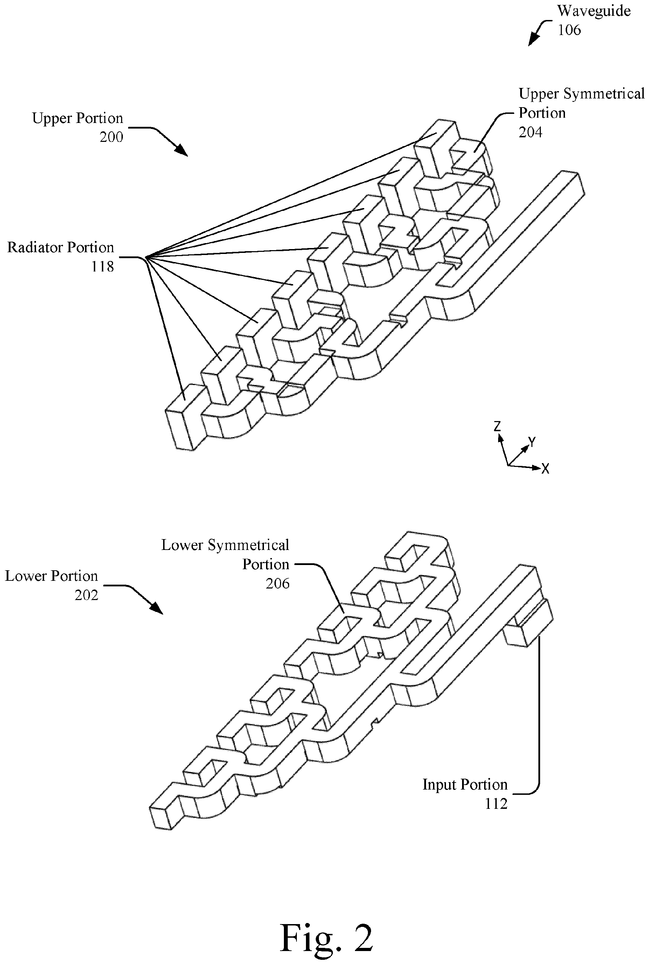

Fig. 2 illustrates an example of the waveguide 106. The waveguide 106 has been separated along the Z-axis to show two respective structures. A convention of the positive Z-direction being from lower to upper (e.g., bottom to top), the positive Y-direction being from left to right, and the positive X-direction being from back (e.g., rear) to front is used for illustration/discussion purposes only and should not be considered as a limitation. For example, the input portion 112 is at a front right bottom portion and the radiator portion is at a back top portion of the waveguide 106.

The waveguide 106 consists of two portions: an upper portion 200 and a lower portion 202. The upper portion 200 and the lower portion 202 each have a separation plane (not shown) that, when the waveguide 106 is assembled, are coincident. The separation plane of the upper portion 200 is coincident with the bottom surface of the upper portion 200, and the separation plane of the lower portion 202 is coincident with the top surface of the lower portion 202. The separation planes are parallel to the X-Y plane.

The upper portion 200 contains the radiator portion 118 and an upper symmetrical portion 204. The upper symmetrical portion 204 extends underneath the radiator portion 118, as discussed further below. The lower portion 202 contains the input portion 112 and a lower symmetrical portion 206, with the lower symmetrical portion 206 extending above the input portion 112, as discussed further below. The upper symmetrical portion 204 and the lower symmetrical portion 206 are mirrors of each other along the separation plane when assembled. By using symmetry, leakage through the separation plane is reduced or eliminated. Accordingly, the upper portion 200 and the lower portion 202 may be assembled without the use of solder or conductive adhesives.

### Example Upper and Lower Symmetrical Portions

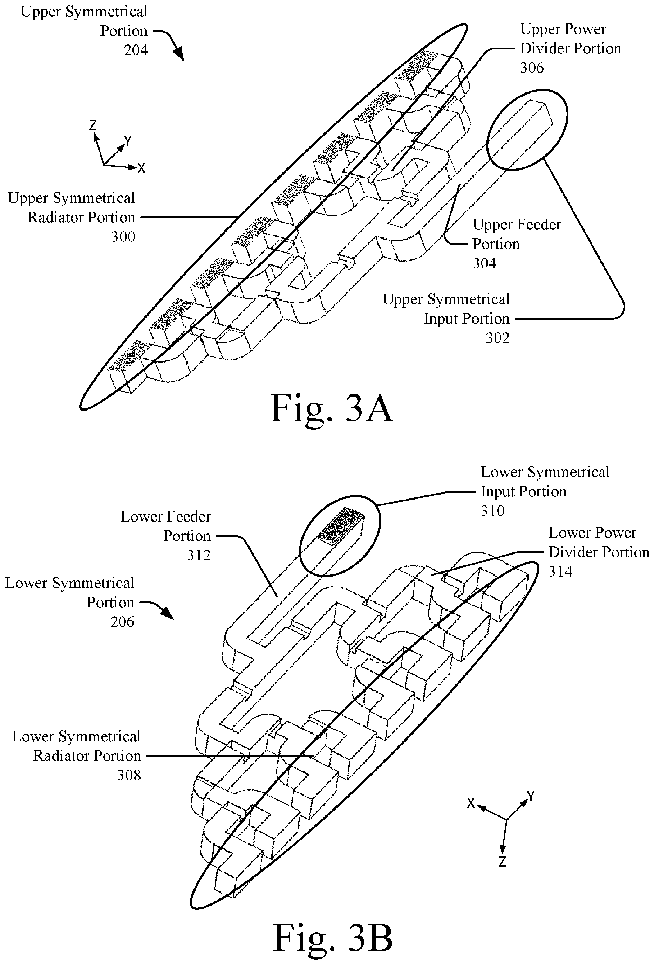

Fig. 3A illustrates an example of the upper symmetrical portion 204 of the upper portion 200. The upper symmetrical portion 204 may be the upper portion 200 without the radiator portion 118. The upper symmetrical portion 204 comprises an upper symmetrical radiator portion 300 and an upper symmetrical input portion 302. Between the upper symmetrical radiator portion 300 and the upper symmetrical input portion 302 are an upper feeder portion 304 that is half of the feeder portion 114 and an upper power divider portion 306 that is half of the power divider portion 116.

Fig. 3B illustrates an example of the lower symmetrical portion 206 of the lower portion 202. The lower symmetrical portion 206 may be the lower portion 202 without the input portion 112. The lower symmetrical portion 206 comprises a lower symmetrical radiator portion 308 and a lower symmetrical input portion 310. Between the lower symmetrical radiator portion 308 and the lower symmetrical input portion 310 are a lower feeder portion 312 that is half of the feeder portion 114 and an upper power divider portion 314 that is half of the power divider portion 116. The lower symmetrical input portion 310 is at a distal end of the lower feeder portion 312 and is symmetrical to (e.g., a mirror of) the upper symmetrical input portion 300 about the separation plane.

### Example Non-Symmetrical Features

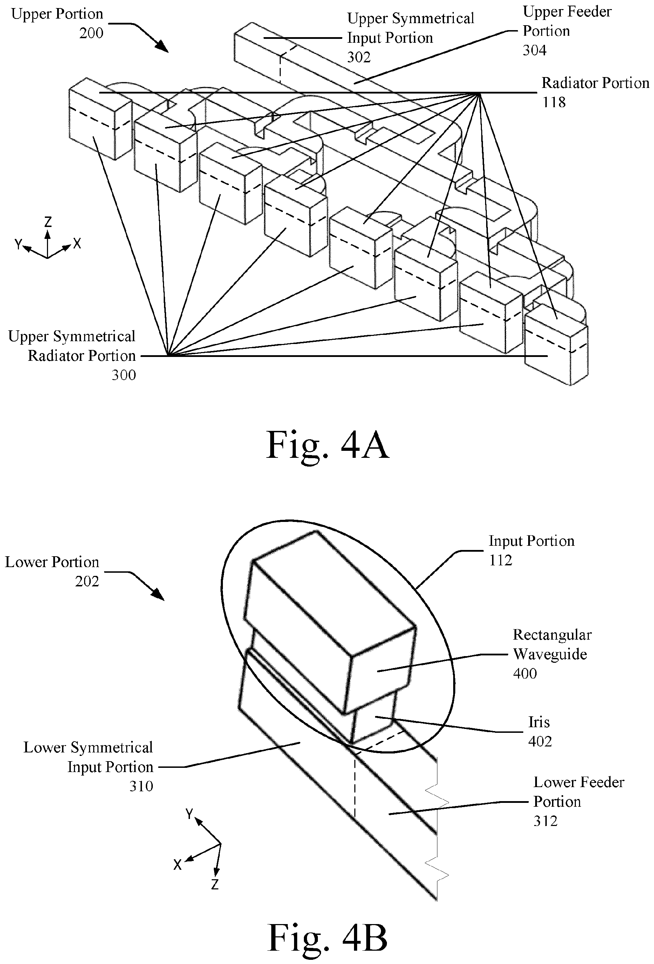

Fig. 4A illustrates an example of the upper portion 200. It should be noted that the upper portion 200 comprises the upper symmetrical radiator portion 300 along with the radiator portion 118. In the illustrated example, an imaginary separation between the upper symmetrical radiator portion 300 and the radiator portion 118 is shown (e.g., dotted line). The radiator portion 118 extends from the upper symmetrical radiator portion 300 orthogonal and away from the separation plane (e.g., in the positive Z-direction). The X-Y footprint (e.g., cross section) of the radiator portion 118, the upper symmetrical radiator portion 300, and the lower symmetrical radiator portion 308 are all consistent (e.g., rectangular, rounded rectangular), with the upper symmetrical radiator portion 300 and the lower symmetrical radiator portion 308 being identical in 3D shape. Also illustrated is an imaginary separation (e.g., dotted line) between the upper symmetrical input portion 302 and the upper feeder portion 304.

By having the 90-degree changes in the energy path at or near the radiator portion 118 (e.g., no chamfers or rounded edges and the lower symmetrical radiator portion 308 mirroring the upper symmetrical radiator portion 300) leakage through the separation plane may be reduced or virtually eliminated. Because of the shape, the EM energy may have a shortest possible path across the separation plane at or near the radiator portion 118 (e.g., no EM energy crosses the separation plane at an angle). Doing so enables the waveguide 106 to be assembled without the use of solder or conductive adhesives while still achieving good performance.

Fig. 4B illustrates an example portion of the lower portion 202 (e.g., proximate the input portion 112). It should be noted that the lower portion 202 comprises the lower symmetrical radiator portion 310 along with the input portion 112. In the illustrated example, an imaginary separation (e.g., dotted line) between the lower symmetrical input portion 310 and the lower feeder portion 312 is shown.

The input portion 112 extends from the lower symmetrical input portion 310 orthogonal and away from the separation plane (e.g., in the negative Z-direction). The X-Y footprint of the input portion 112, the lower symmetrical input portion 310, and the upper symmetrical input portion 302 are all consistent, with the lower symmetrical input portion 310 and the upper symmetrical input portion 302 being congruent in 3D shape.

By having the 90-degree changes in the energy path at or near the input portion 112 (e.g., no chamfers or rounded edges and the upper symmetrical input portion 302 mirroring the lower symmetrical input portion 310) leakage through the separation plane may be reduced or virtually eliminated. Because of the shape, the EM energy may have a shortest possible path across the separation plane at or near the input portion 112 (e.g., no EM energy crosses the separation plane at an angle). Similar to the upper portion 200, doing so enables the waveguide 106 to be assembled without the use of solder or conductive adhesives and still achieve good performance.

The input portion 112 contains a rectangular waveguide 400 and an iris 402. The rectangular waveguide 400 may be a rectangular or square waveguide (e.g., WR10 waveguide) configured to interface with an antenna of a circuit board. The iris 402 is configured to mitigate leakage through the separation plane due to the asymmetry of the input portion 112. The iris 402 may have a similar X-Y footprint as the rectangular waveguide 400 but be smaller in one or two dimensions according to application. Furthermore, the length of the iris 402 may be varied according to application.

### Example Method

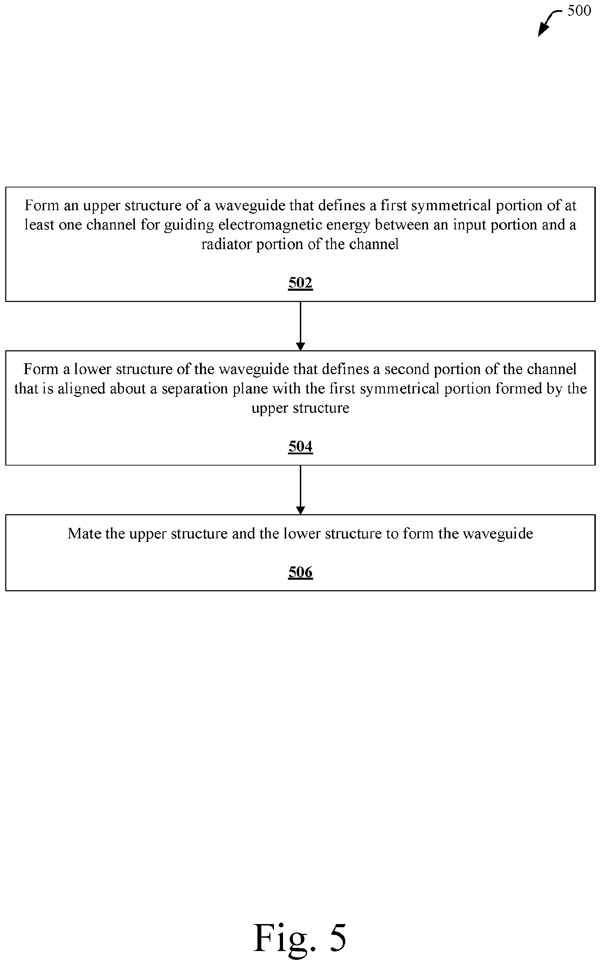

Fig. 5 illustrates an example method 500 of forming a symmetrical two-piece waveguide. The order in which the operations are shown and/or described is not intended to be construed as a limitation, and the order may be rearranged without departing from the scope of this disclosure. Furthermore, any number of the operations can be combined with any other number of the operations to implement the example process flow or an alternate process flow.

At step 502, an upper structure of a waveguide is formed. The upper structure defines a first symmetrical portion of at least one channel for guiding electromagnetic energy between an input portion and a radiator portion of the channel. The upper structure further forms the radiator portion extending from the first symmetrical portion, orthogonal to a separation plane, and away from a second symmetrical portion. For example, the upper structure that forms the upper portion 200 may be formed. The upper structure may be formed using computer numeric control (CNC), injection molding, casting, machining, or any other manufacturing process and may be formed of metal or plastic. As part of forming the upper structure, surfaces of the upper structure (e.g., the upper portion 200) may be metallicized (e.g., if the upper structure is formed of a non-conductive material). The radiator portion 118 may extend to an external surface of the upper structure when the upper structure is attached to a lower structure.

At step 504, the lower structure of the waveguide is formed. The lower structure defines the second symmetrical portion of the channel that is aligned about a separation plane with the first symmetrical portion formed by the upper structure. The lower structure further forms the input portion extending from the second symmetrical portion, orthogonal to the separation plane, and away from the first symmetrical portion. For example, the lower structure that forms the lower portion 202 may be formed. The lower structure may be formed using CNC, injection molding, casting, machining, or any other manufacturing process and may be formed of metal or plastic. As part of forming the lower structure, surfaces of the lower structure (e.g., the lower portion 202) may be metallicized (e.g., if the lower structure is formed of a non-conductive material). The input portion 112 may extend to an external surface of the lower structure when the lower structure is attached to the upper structure.

At step 806, the upper structure is mated with the lower structure to form the waveguide. For example, the upper structure may be mated to the lower structure to form the waveguide 106. The upper structure may be mated to the lower structure along the separation plane (e.g., on or parallel to the X-Y plane) without the use of solder or conductive adhesive. The upper structure may be glued/bonded (using a non-conductive adhesive), bolted, screwed (e.g., using one or more screws), snapped (e.g., using one or more snaps), welded, clamped using one or more clamps, press-fit, or any other assembly process known by those of ordinary skill in the art.

By forming the upper structure and lower structure to form the waveguide 106, leakage through the separation plane can be mitigated or eliminated. By doing so, solder or conductive adhesives are not necessary, thereby easing manufacturing and/or lowering costs associated with the waveguide 106.

### Examples

Example 1: A waveguide comprising: an upper structure forming a first symmetrical portion of at least one channel that defines an energy path for electromagnetic energy to propagate between an input portion and a radiator portion of the channel; and a lower structure forming a second symmetrical portion of the channel that is aligned about a separation plane with the first symmetrical portion formed by the upper structure, wherein: the upper structure further forms the radiator portion to extend from the first symmetrical portion, orthogonal to the separation plane, and away from the second symmetrical portion; and the lower structure further forms the input portion to extend from the second symmetrical portion, orthogonal to the separation plane, and away from the first symmetrical portion.

Example 2: The waveguide of example 1, wherein: the first symmetrical portion comprises a first power divider portion; the second symmetrical portion comprises a second power divider portion; and the first power divider portion and the second power divider portion are configured to divide power between portions of the radiator portion.

Example 3: The waveguide of example 2, wherein the first power divider portion and the second power divider portion are configured to divide power parallel to the separation plane.

Example 4: The waveguide of example 3, wherein: the first symmetrical portion comprises a first feeder portion that extends parallel to the separation plane; and the second symmetrical portion comprises a second feeder portion that extends parallel to the separation plane.

Example 5: The waveguide of example 4, wherein the input portion is at a distal end of the second feeder portion.

Example 6: The waveguide of example 1, wherein the radiator portion comprises a plurality of radiators extending from respective portions of the first symmetrical portion.

Example 7: The waveguide of example 1, wherein the input portion comprises a rectangular waveguide.

Example 8: The waveguide of example 7, wherein the rectangular waveguide is a WR10 waveguide.

Example 9: The waveguide of example 7, wherein the input portion further comprises an iris between the rectangular waveguide and the second symmetrical portion.

Example 10: The waveguide of example 9, wherein the iris has a cross section that is smaller than the rectangular waveguide.

Example 11: The waveguide of example 1, wherein the upper structure and the lower structure are configured to mate without soldering or conductive bonding.

Example 12: The waveguide of example 11, wherein the upper structure and the lower structure are configured to mate using one or more of screws, snaps, press-fit, clamps, or non-conductive adhesive.

Example 13: The waveguide of example 1, wherein: the radiator portion extends to an external surface of the upper structure; and the input portion extends to an external surface of the lower structure.

Example 14: The waveguide of example 1, wherein the electromagnetic energy is radar energy.

Example 15: The waveguide of example 1, wherein the upper structure and the lower structure are injection molded.

Example 16: A method comprising: forming an upper structure of a waveguide that defines a first symmetrical portion of at least one channel for guiding electromagnetic energy between an input portion and a radiator portion of the channel; and forming a lower structure of the waveguide that defines a second symmetrical portion of the channel that is aligned about a separation plane with the first symmetrical portion formed by the upper structure; and mating the upper structure and the lower structure to form the waveguide, wherein: the upper structure further forms the radiator portion extending from the first symmetrical portion, orthogonal to the separation plane, and away from the second symmetrical portion; and the lower structure further forms the input portion extending from the second symmetrical portion, orthogonal to the separation plane, and away from the first symmetrical portion.

Example 17: The method of example 16, wherein the mating the upper structure and the lower structure does not utilize solder or a conductive adhesive.

Example 18: The method of example 17, wherein the mating the upper structure and the lower structure utilizes one or more of screws, snaps, press-fit, clamps, or non-conductive adhesive.

Example 19: The method of example 16, wherein the forming the upper structure and forming the lower structure utilizes injection molding.

Example 20: The method of example 16, wherein: the forming the first symmetrical portion comprises forming a first power divider portion; the forming the second symmetrical portion comprises forming a second power divider portion; and the first power divider portion and the second power divider portion are configured to divide power between portions of the radiator portion.

### Conclusion

While various embodiments of the disclosure are described in the foregoing description and shown in the drawings, it is to be understood that this disclosure is not limited thereto but may be variously embodied to practice within the scope of the following claims. From the foregoing description, it will be apparent that various changes may be made without departing from the spirit and scope of the disclosure as defined by the following claims.

The use of "or" and grammatically related terms indicates non-exclusive alternatives without limitation unless the context clearly dictates otherwise. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

## Claims

1. A waveguide comprising:
an upper structure forming a first symmetrical portion of at least one channel that defines an energy path for electromagnetic energy to propagate between an input portion and a radiator portion of the channel; and
a lower structure forming a second symmetrical portion of the channel that is aligned about a separation plane with the first symmetrical portion formed by the upper structure, wherein:
the upper structure further forms the radiator portion to extend from the first symmetrical portion, orthogonal to the separation plane, and away from the second symmetrical portion; and
the lower structure further forms the input portion to extend from the second symmetrical portion, orthogonal to the separation plane, and away from the first symmetrical portion.

2. The waveguide of claim 1, wherein:
the first symmetrical portion comprises a first power divider portion;
the second symmetrical portion comprises a second power divider portion; and
the first power divider portion and the second power divider portion are configured to divide power between portions of the radiator portion.

3. The waveguide of claim 2, wherein the first power divider portion and the second power divider portion are configured to divide power parallel to the separation plane.

4. The waveguide of claim 3, wherein:
the first symmetrical portion comprises a first feeder portion that extends parallel to the separation plane; and
the second symmetrical portion comprises a second feeder portion that extends parallel to the separation plane.

5. The waveguide of claim 4, wherein the input portion is at a distal end of the second feeder portion.

6. The waveguide of any preceding claim, wherein the radiator portion comprises a plurality of radiators extending from respective portions of the first symmetrical portion.

7. The waveguide of any preceding claim, wherein the input portion comprises a rectangular waveguide.

8. The waveguide of claim 7, wherein the rectangular waveguide is a WR10 waveguide.

9. The waveguide of claim 7 or 8, wherein the input portion further comprises an iris between the rectangular waveguide and the second symmetrical portion.

10. The waveguide of claim 9, wherein the iris has a cross section that is smaller than the rectangular waveguide.

11. The waveguide of any preceding claim, wherein the upper structure and the lower structure are configured to mate without soldering or conductive bonding.

12. The waveguide of claim 11, wherein the upper structure and the lower structure are configured to mate using one or more of screws, snaps, press-fit, clamps, or non-conductive adhesive.

13. The waveguide of any preceding claim, wherein:
the radiator portion extends to an external surface of the upper structure; and
the input portion extends to an external surface of the lower structure.

14. A method comprising:
forming an upper structure of a waveguide that defines a first symmetrical portion of at least one channel for guiding electromagnetic energy between an input portion and a radiator portion of the channel; and
forming a lower structure of the waveguide that defines a second symmetrical portion of the channel that is aligned about a separation plane with the first symmetrical portion formed by the upper structure; and
mating the upper structure and the lower structure to form the waveguide,
wherein:
the upper structure further forms the radiator portion extending from the first symmetrical portion, orthogonal to the separation plane, and away from the second symmetrical portion; and
the lower structure further forms the input portion extending from the second symmetrical portion, orthogonal to the separation plane, and away from the first symmetrical portion.

15. The method of claim 14, wherein the mating the upper structure and the lower structure does not utilize solder or a conductive adhesive.
